# EUROPEAN PATENT APPLICATION

(11) **EP 4 580 176 A1**
(43) Date of publication of application: **02.07.2025**
(21) Application number: 22960238.8
(22) Date of filing: 30.09.2022
(51) Int. Cl.: H04N 7/22

(54) **REGULATION SYSTEM AND REGULATION METHOD**

(71) Applicant: Huawei Technologies Co., Ltd., Shenzhen, Guangdong 518129 (CN)
(72) Inventor: YIN, Yanlong, Shenzhen, Guangdong 518129 (CN); GUO, Yuhao, Shenzhen, Guangdong 518129 (CN); GU, Zenghui, Shenzhen, Guangdong 518129 (CN); DUAN, Fei, Shenzhen, Guangdong 518129 (CN); WU, Yixin, Shenzhen, Guangdong 518129 (CN)
(74) Representative: Körber, Martin Hans
(86) International application number: PCT/CN2022/123082
(87) International publication number: WO 2024/065611

(57) **Abstract**

This application discloses an adjustment and control system and an adjustment and control method, to simplify an operating point regulation process for a microring device. The system includes a detector, a microring device, and a control device. The detector may be configured to receive a first beam and a second beam, perform optical-to-electrical conversion on the first beam to obtain a first current signal, perform optical-to-electrical conversion on the second beam to obtain a second current signal, and determine a differential current signal between the first current signal and the second current signal, where the first beam and the second beam are obtained based on input light of the adjustment and control system. The control device may be configured to receive the differential current signal, and determine a control signal based on the differential current signal, where the control signal is used to adjust an operating point of the microring device, so that the microring device operates at a target operating point (to be specific, a crosspoint between a wavelength of an optical signal in the microring device and a spectrum of the microring device).

## Description

### TECHNICAL FIELD

This application relates to the field of optical technologies, and in particular, to an adjustment and control system and an adjustment and control method.

### BACKGROUND

Silicon photonics is a large-scale silicon-based photoelectron integration technology in which photons and electrons serve as information carriers. The technology can greatly improve performance of an integrated chip, and is a basic supporting technology for emerging industries such as big data, artificial intelligence, and future mobile communication. The technology may be widely applied to a big data center, 5G, internet of things, and other industries. A silicon photonic chip is an integrated optical path that integrates silicon photonic materials and components through a standard semiconductor process. In the silicon photonic chip, a plurality of optical components may be integrated on a same silicon-based substrate. In the optical communication field, a conventional optical module is usually implemented by using a laser chip. However, with an increase in communication bandwidth and a communication capacity, the laser chip cannot meet requirements of co-packaged optics for a high speed and a high capacity. However, the silicon photonic chip is highly integrated and therefore can meet the requirements of co-packaged optics for a high speed and a high capacity. Therefore, the silicon photonic chip is widely used in the optical communication field. In addition, because the silicon photonic chip has unique advantages in scalability, compatibility, and other aspects, the silicon photonic chip is also used in the optical computing field.

As a core component of the silicon photonic chip, a silicon photonic modulator may be configured to modulate an optical signal. Currently, most silicon photonic modulators are Mach-Zehnder (Mach-Zehnder, MZ) modulators. However, a size of such a modulator is usually approximately 3 mm, a drive voltage ranges from 3 Vpp to 4 Vpp, bandwidth is limited, and a structure is complex. Therefore, it is difficult to use such a modulator in a high-density optical communication engine or high-density large-scale optical computing in the future. However, a size of the microring modulator is approximately 10 µm, and is reduced by two to three orders of magnitude compared with the size of the Mach-Zehnder modulator. In addition, a drive voltage ranges only from 1.5 Vpp to 2 Vpp, and the microring modulator is likely to be directly driven by a CMOS electronic chip. Power consumption is also low. In addition, bandwidth of the microring modulator is higher than the bandwidth of the Mach-Zehnder modulator, and can meet a requirement for communication at higher bandwidth. Therefore, the microring modulator is also commonly used as a silicon photonic modulator.

The microring modulator is of a microring structure, and a spectral curve of the microring modulator is a Lorentzian curve. Linearity of the spectral curve is poor, and control precision for an operating point is high. In addition, the microring modulator is made of a silicon material. Due to a high thermo-optical coefficient of the silicon material, an operating point of the microring modulator (to be specific, a location, in a transmission spectrum of the microring modulator, of a wavelength of an optical signal in the microring modulator) is affected by temperature. For example, when the silicon photonic chip is used in the optical computing field, when temperature of the silicon photonic chip changes by 0.1°C, temperature of the microring modulator in the silicon photonic chip also changes by 0.1°C, and a drift amount of the operating point of the microring modulator is approximately 1 dB. Consequently, an error of a computing result of optical computing increases. Therefore, the operating point of the microring modulator needs to be regulated.

Currently, in the industry, a closed-loop feedback system including a monitoring detector and a microring operating point regulation device is used to regulate the operating point of the microring modulator. For example, two detectors, a signal comparison circuit, a regulation element, and a control device are disposed in the closed-loop feedback system. One detector monitors one optical signal. The signal comparison circuit compares two optical signals detected by the two detectors, and inputs a comparison result to the control device. The control device controls, based on the signal comparison result, the regulation element to control an operating point of a microring device. However, the closed-loop feedback system includes a large quantity of components, leading to a complex control link and high regulation costs.

Therefore, how to simplify a manner of regulating the operating point of the microring modulator has quite high practical value for promoting commercial application of the microring modulator.

### SUMMARY

This application provides an adjustment and control system and an adjustment and control method, to simplify an operating point regulation process for a microring device.

According to a first aspect, an embodiment of this application provides an adjustment and control system. The system includes a detector, a microring device, and a control device. The detector may be configured to receive a first beam and a second beam, perform optical-to-electrical conversion on the first beam to obtain a first current signal, perform optical-to-electrical conversion on the second beam to obtain a second current signal, and determine a differential current signal between the first current signal and the second current signal, where the first beam and the second beam are obtained based on input light of the adjustment and control system. The control device may be configured to receive the differential current signal, and determine a control signal based on the differential current signal, where the control signal is used to adjust an operating point of the microring device, so that the microring device operates at a target operating point. The target operating point is a crosspoint between a wavelength of an optical signal in the microring device and a spectrum of the microring device.

It can be understood that there may be one or more microring devices in this embodiment of this application. In other words, the control device in the adjustment and control system can regulate an operating point or operating points of one or more microring devices.

In this embodiment of this application, the detector in the adjustment and control system may receive the first beam and the second beam, perform optical-to-electrical conversion on the first beam and the second beam, and then compare the first beam with the second beam. In addition, after comparing the first beam with the second beam, the detector may further form the differential current signal between the current signals corresponding to the first beam and the second beam. Then the control device may determine, based on the differential current signal, the control signal used to adjust the operating point of the microring device. In this way, compared with a technical solution in which one detector monitors one optical signal and a signal comparison circuit is used to compare two optical signals detected by two detectors to regulate an operating point of a microring device, in this embodiment of this application, no signal comparison circuit needs to be additionally disposed in the adjustment and control system. This effectively reduces circuit complexity of the adjustment and control system, simplifies an operating point regulation process for the microring device, and reduces costs of the adjustment and control system.

In this embodiment of this application, determining the first beam and the second beam includes but is not limited to the following manners.

Manner 1: The system further includes a first optical splitter, a second optical splitter, a first optical waveguide, a second optical waveguide, a third optical waveguide, and a fourth optical waveguide. The first optical splitter may receive the input light, and split the input light to obtain the first beam and a third beam, where the first beam is input to the detector through the first optical waveguide, and the third beam is input to the second optical splitter through the third optical waveguide. The second optical splitter receives the third beam, and splits the third beam to obtain the second beam and output light, where the second beam is input to the detector through the second optical waveguide, and the output light is output through the third optical waveguide. Alternatively, the second optical splitter receives the third beam, and splits the third beam to obtain the second beam and a fourth beam, where the second beam is input to the detector through the second optical waveguide, the third beam sequentially passes through the third optical waveguide, the microring device, and the fourth optical waveguide to obtain output light, and the output light is output through a drop port of the microring device.

In the manner 1, the first optical splitter and the second optical splitter are disposed in the adjustment and control system, so that the first optical splitter can split the input light of the adjustment and control system to obtain an input signal for the detector, and the second optical splitter can further split the third beam obtained by the first optical splitter through splitting to obtain another input signal for the detector. In this way, the detector can compare the two input signals, and the detector outputs a comparison result. In addition, the output light may be light obtained by the second optical splitter by spitting the third beam, or the output light may be obtained after the third beam sequentially passes through the third optical waveguide, the microring device, and the fourth optical waveguide, and may be output through the drop port of the microring device. In this way, a plurality of implementations of the output light are provided, so that the technical solution in this embodiment of this application can be flexibly implemented.

In a possible design, a split ratio of the first optical splitter is determined based on the target operating point, and/or a split ratio of the second optical splitter is determined based on the target operating point. In this design, the split ratio of the first optical splitter and/or the split ratio of the second optical splitter can be flexibly designed based on the target operating point, so that the microring device can operate at the target operating point as much as possible, to reduce a quantity of times of adjusting the operating point of the microring device, and effectively reduce operation interruptions of the microring device.

Manner 2: The system further includes a first optical splitter, a first optical waveguide, a second optical waveguide, and a third optical waveguide. The first optical splitter may receive the input light, and split the input light to obtain the first beam and the second beam, where the first beam is input to the detector through the first optical waveguide, and the second beam is input to the detector through the second optical waveguide. The second beam sequentially passes through the second optical waveguide, the microring device, and the third optical waveguide to obtain output light, and the output light is output through a drop port of the microring device.

In the manner 2, the first optical splitter splits the input light to obtain two input signals for the detector, the second beam obtained through splitting may sequentially pass through the second optical waveguide, the microring device, and the third optical waveguide to obtain the output light, and the output light is output through the drop port of the microring device. This can effectively reduce complexity of the adjustment and control system, and reduce component costs of the adjustment and control system.

In a possible design, a split ratio of the first optical splitter is determined based on the target operating point. In this design, the split ratio of the first optical splitter is determined based on the target operating point, so that the microring device can operate at the target operating point as much as possible, to reduce a quantity of times of adjusting the operating point of the microring device, and effectively reduce operation interruptions of the microring device.

Manner 3: The system further includes a first optical splitter, a first optical waveguide, a second optical waveguide, and a third optical waveguide. The first optical splitter may receive the input light, and split the input light to obtain the first beam and output light, where the first beam is input to the detector through the first optical waveguide, and the output light is output through the third optical waveguide. The second optical waveguide is located at a drop port of the microring device. The output light sequentially passes through the third optical waveguide, the microring device, and the second optical waveguide to obtain the second beam. The second beam is input to the detector through the second optical waveguide.

In the manner 3, the first optical splitter splits the input light to obtain the first beam and the output light. The first beam is used as an input signal for the detector. The output light sequentially passes through the third optical waveguide, the microring device, and the second optical waveguide to obtain the second beam, and the second beam is used as another input signal for the detector. In this way, two input signals for the detector can be obtained through one optical splitter, so that complexity of the adjustment and control system is effectively reduced.

In a possible design, a split ratio of the first optical splitter is determined based on the target operating point of the microring device, and/or a first coupling coefficient between the second optical waveguide and the microring device is determined based on the target operating point of the microring device, and/or a second coupling coefficient between the third optical waveguide and the microring device is determined based on the target operating point of the microring device. In this design, at least one of the split ratio of the first optical splitter, the first coupling coefficient between the second optical waveguide and the microring device, or the second coupling coefficient between the third optical waveguide and the microring device is flexibly designed based on the target operating point, so that the microring device can operate at the target operating point as much as possible, to reduce a quantity of times of adjusting the operating point of the microring device, and effectively reduce operation interruptions of the microring device.

In a possible design, the first coupling coefficient is related to a length of an optical waveguide that is in the second optical waveguide and that interacts with the microring device, and/or is related to a distance between the second optical waveguide and the microring device; and the second coupling coefficient is related to a length of an optical waveguide that is in the third optical waveguide and that interacts with the microring device, and/or is related to a distance between the third optical waveguide and the microring device. In this design, a plurality of manners of determining the first coupling coefficient and the second coupling coefficient are provided, so that the first coupling coefficient and the second coupling coefficient can be flexibly determined.

In a possible design, the system further includes a first optical attenuator and a second optical attenuator. Before the detector receives the first beam, the first optical attenuator may adjust light intensity of the first beam, and input the adjusted first beam to the detector. Before the detector receives the second beam, the second optical attenuator may adjust light intensity of the second beam, and input the adjusted second beam to the detector. In this design, the first optical attenuator and the second optical attenuator are disposed in the system, to adjust the light intensity of the first beam and the second beam before the detector receives the first beam and the second beam, so that the differential current signal corresponding to the first beam and the second beam can be close to zero as much as possible, and the microring device operates at the target operating point.

In a possible design, the system further includes a trans-impedance amplifier. The detector may further input the differential current signal to the trans-impedance amplifier. Further, before the control device receives the differential current signal, the trans-impedance amplifier may amplify the differential current signal, and then input the amplified differential current signal to the control device. In this design, the trans-impedance amplifier amplifies the differential current signal, so that the differential current signal received by the control device is more accurate, and the control signal corresponding to the differential current signal regulates the microring device more accurately.

In a possible design, the system further includes a drive, and the control signal indicates a drive voltage of the drive. The control device may further send the control signal to the drive. The drive receives the control signal, and adjusts the operating point of the microring device based on the drive voltage. In this design, the control device adjusts the operating point of the microring device through the drive, so that regulation on the microring device is easy to implement.

In a possible design, the system further includes a tuning unit, and the tuning unit is disposed on the microring device. That the drive adjusts the operating point of the microring device based on the drive voltage includes: The drive adjusts a voltage value or a current value of the tuning unit based on the drive voltage, to adjust the operating point of the microring device. In this design, the tuning unit is disposed in the system, so that the drive can adjust the voltage value or the current value of the tuning unit based on the drive voltage indicated by the control signal, to make the operating point of the microring device be the target operating point.

In a possible design, the microring device includes a microring and/or a microring modulator. A shape of the microring may be any one of a runway-like shape, an elliptic shape, or a circular shape. This is not specifically limited in this embodiment of this application.

In a possible design, the microring modulator includes an electro-optic effect microring modulator and/or a carrier dispersion effect microring modulator.

In a possible design, the system further includes an optical switch, and the optical switch may be configured to control whether to input the second beam to the detector. In this design, the optical switch is disposed in the adjustment and control system, to control whether to input the second beam to the detector. When there are a plurality of microring devices, a plurality of optical switches may be disposed in the adjustment and control system. Each optical switch corresponds to one second beam. Each optical switch may control whether to input, to the detector, a second beam corresponding to the optical switch. In this way, regulation on operating points of the plurality of microring modulators is implemented.

According to a second aspect, an embodiment of this application provides an adjustment and control method. The method is applied to an adjustment and control system. The system includes a detector, a microring device, and a control device. The method includes: The detector receives a first beam and a second beam, performs optical-to-electrical conversion on the first beam to obtain a first current signal, performs optical-to-electrical conversion on the second beam to obtain a second current signal, and determines a differential current signal between the first current signal and the second current signal, where the first beam and the second beam are obtained based on input light of the adjustment and control system. The control device receives the differential current signal, and determines a control signal based on the differential current signal, where the control signal is used to adjust an operating point of the microring device, so that the microring device operates at a target operating point. The target operating point is a crosspoint between a wavelength of an optical signal in the microring device and a spectrum of the microring device.

In a possible design, the system further includes a first optical splitter, a second optical splitter, a first optical waveguide, a second optical waveguide, a third optical waveguide, and a fourth optical waveguide. The method further includes: The first optical splitter receives the input light, and splits the input light to obtain the first beam and a third beam, where the first beam is input to the detector through the first optical waveguide, and the third beam is input to the second optical splitter through the third optical waveguide. The second optical splitter receives the third beam, and splits the third beam to obtain the second beam and output light, where the second beam is input to the detector through the second optical waveguide, and the output light is output through the third optical waveguide. Alternatively, the second optical splitter receives the third beam, and splits the third beam to obtain the second beam and a fourth beam, where the second beam is input to the detector through the second optical waveguide, the third beam sequentially passes through the third optical waveguide, the microring device, and the fourth optical waveguide to obtain output light, and the output light is output through a drop port of the microring device.

In a possible design, a split ratio of the first optical splitter is determined based on the target operating point, and/or a split ratio of the second optical splitter is determined based on the target operating point.

In a possible design, the system further includes a first optical splitter, a first optical waveguide, a second optical waveguide, and a third optical waveguide. The method further includes: The first optical splitter receives the input light, and splits the input light to obtain the first beam and the second beam, where the first beam is input to the detector through the first optical waveguide, and the second beam is input to the detector through the second optical waveguide. The second beam sequentially passes through the second optical waveguide, the microring device, and the third optical waveguide to obtain output light, and the output light is output through a drop port of the microring device.

In a possible design, a split ratio of the first optical splitter is determined based on the target operating point.

In a possible design, the system further includes a first optical splitter, a first optical waveguide, a second optical waveguide, and a third optical waveguide. The method further includes: The first optical splitter receives the input light, and splits the input light to obtain the first beam and output light, where the first beam is input to the detector through the first optical waveguide, and the output light is output through the third optical waveguide. The second optical waveguide is located at a drop port of the microring device. The output light sequentially passes through the third optical waveguide, the microring device, and the second optical waveguide to obtain the second beam. The second beam is input to the detector through the second optical waveguide.

In a possible design, a split ratio of the first optical splitter is determined based on the target operating point of the microring device, and/or a first coupling coefficient between the second optical waveguide and the microring device is determined based on the target operating point of the microring device, and/or a second coupling coefficient between the third optical waveguide and the microring device is determined based on the target operating point of the microring device.

In a possible design, the first coupling coefficient is related to a length of an optical waveguide that is in the second optical waveguide and that interacts with the microring device, and/or is related to a distance between the second optical waveguide and the microring device; and the second coupling coefficient is related to a length of an optical waveguide that is in the third optical waveguide and that interacts with the microring device, and/or is related to a distance between the third optical waveguide and the microring device.

In a possible design, the system further includes a first optical attenuator and a second optical attenuator. The method further includes: Before the detector receives the first beam, the first optical attenuator adjusts light intensity of the first beam, and inputs the adjusted first beam to the detector. Before the detector receives the second beam, the second optical attenuator adjusts light intensity of the second beam, and inputs the adjusted second beam to the detector.

In a possible design, the system further includes a trans-impedance amplifier. The method further includes: The detector inputs the differential current signal to the trans-impedance amplifier. Before the control device receives the differential current signal, the trans-impedance amplifier amplifies the differential current signal, and then inputs the amplified differential current signal to the control device.

In a possible design, the system further includes a drive, and the control signal indicates a drive voltage of the drive. The method further includes: The control device sends the control signal to the drive. The drive receives the control signal, and adjusts the operating point of the microring device based on the drive voltage.

In a possible design, the system further includes a tuning unit, and the tuning unit is disposed on the microring device. That the drive adjusts the operating point of the microring device based on the drive voltage includes: The drive adjusts a voltage value or a current value of the tuning unit based on the drive voltage, to adjust the operating point of the microring device.

In a possible design, the microring device includes a microring and/or a microring modulator.

In a possible design, the system further includes an optical switch. The method further includes: The optical switch controls whether to input the second beam to the detector.

For benefits of the method according to any one of the second aspect or the optional designs of the second aspect, refer to related descriptions in the first aspect. Details are not described herein again.

### BRIEF DESCRIPTION OF DRAWINGS

FIG. 1 is a diagram of a structure of a microring modulator according to an embodiment of this application;
FIG. 2A is a diagram of a structure of an exchange according to an embodiment of this application;
FIG. 2B is a diagram of a structure of an optical engine according to an embodiment of this application;
FIG. 3 is a diagram of an architecture of optical computing according to an embodiment of this application;
FIG. 4 is a diagram of a target operating point of a microring device according to an embodiment of this application;
FIG. 5A is a diagram of a structure of an adjustment and control system for a microring modulator;
FIG. 5B is a diagram of a structure of another adjustment and control system for a microring modulator;
FIG. 6 is a diagram of a structure of an adjustment and control system according to an embodiment of this application;
FIG. 7 is a diagram of another structure of an adjustment and control system according to an embodiment of this application;
FIG. 8 is a diagram of another structure of an adjustment and control system according to an embodiment of this application;
FIG. 9 is a diagram of another structure of an adjustment and control system according to an embodiment of this application;
FIG. 10 is a diagram of another structure of an adjustment and control system according to an embodiment of this application;
FIG. 11 is a diagram of another structure of an adjustment and control system according to an embodiment of this application;
FIG. 12A is a diagram of a structure of a control device 602 in an adjustment and control system according to an embodiment of this application;
FIG. 12B is a diagram of another structure of a control device 602 in an adjustment and control system according to an embodiment of this application;
FIG. 12C is a diagram of a structure of a first optical splitter or a second optical splitter in an adjustment and control system according to an embodiment of this application;
FIG. 13 is a diagram of another structure of an adjustment and control system according to an embodiment of this application;
FIG. 14 is a diagram of another structure of an adjustment and control system according to an embodiment of this application;
FIG. 15 is a diagram of another structure of an adjustment and control system according to an embodiment of this application;
FIG. 16A is a diagram of another structure of an adjustment and control system according to an embodiment of this application;
FIG. 16B is a diagram of another structure of an adjustment and control system according to an embodiment of this application;
FIG. 16C is a diagram of another structure of an adjustment and control system according to an embodiment of this application; and
FIG. 17 is a flowchart of an adjustment and control method according to an embodiment of this application.

### DESCRIPTION OF EMBODIMENTS

The following describes embodiments of this application in detail with reference to accompanying drawings.

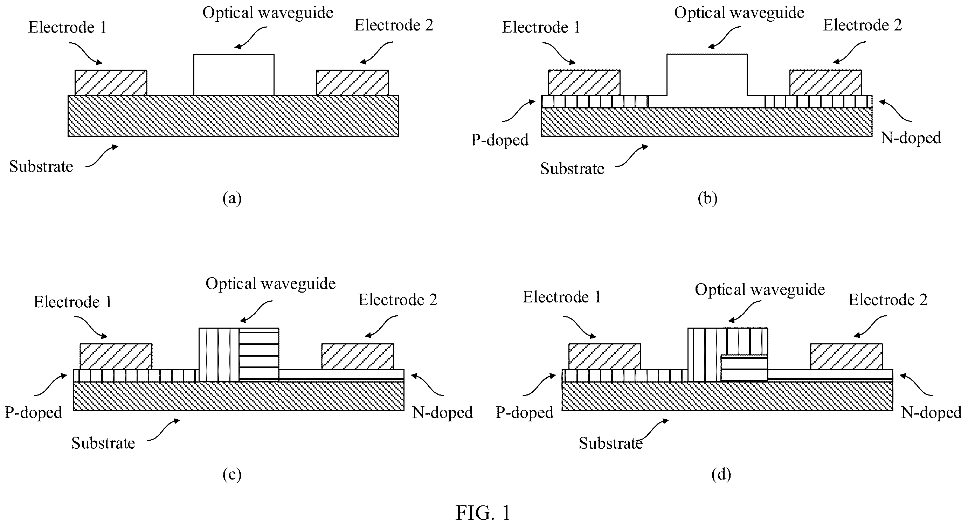

First, some terms in this application are described. It can be understood that the descriptions are intended for ease of understanding by a person skilled in the art, but do not constitute a limitation on the protection scope claimed in this application.
1. A microring device may also be referred to as a microring optical device, and includes, for example, a microring or a microring modulator. The microring is also referred to as a microring resonator, and is an optical device that is mainly made of silicon, has high integration, a strong function, and a small size, and can be used in a photoelectric integrated circuit. A shape of the microring may be any one of a runway-like shape, an elliptic shape, or a circular shape. This is not specifically limited in embodiments of this application. The microring modulator is configured to modulate an optical signal. The microring modulator may be used in any one of the following application scenarios: a data computing center, an optical module in a long-distance backbone network, an optical exchange, optical computing, or the like. The microring modulator may be an electro-optic effect microring modulator and/or a carrier dispersion effect microring modulator. Further, the carrier dispersion effect microring modulator may include at least one of a microring modulator with a photodiode (Positive Intrinsic-Negative, PIN) structure, a microring modulator with a horizontal PN junction, or a microring modulator with a vertical PN junction. For example, (a) in FIG. 1 is a diagram of a structure of an electro-optic effect microring modulator, (b) in FIG. 1 is a diagram of a structure of a microring modulator with a PIN structure, (c) in FIG. 1 is a diagram of a structure of a microring modulator with a horizontal PN junction, and (d) in FIG. 1 is a diagram of a structure of a microring modulator with a vertical PN junction.

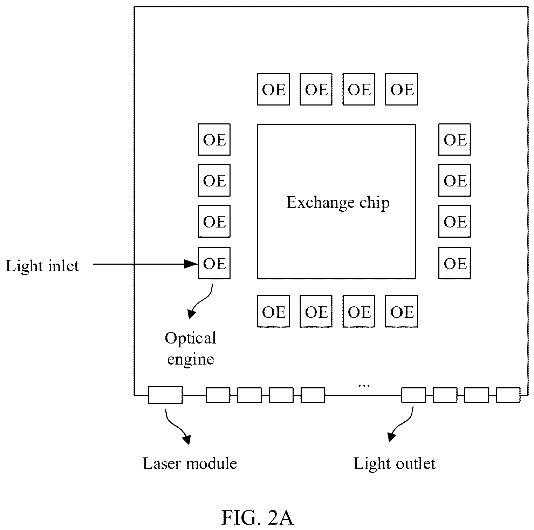

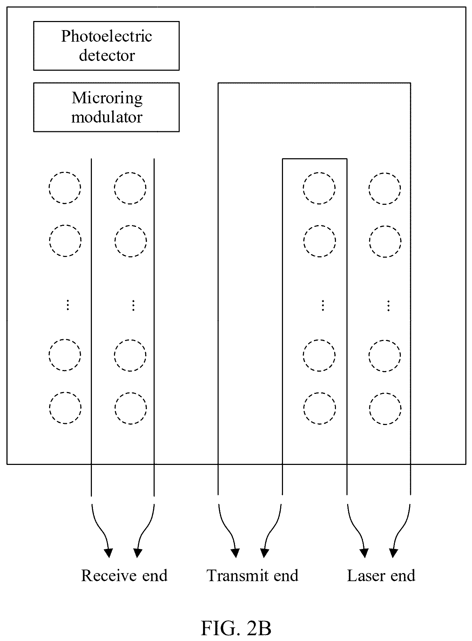

Example 1: FIG. 2A is a diagram of a scenario in which a microring modulator is used in an exchange. The exchange in FIG. 2A includes an exchange chip, an optical engine (Optical Engine, OE), a laser module, a light inlet, and a light outlet. The optical engine may perform data communication with the exchange chip, convert an electrical signal output by the exchange chip into an optical signal, and output the optical signal through the light outlet. In addition, the optical engine may further receive an optical signal that is input by the laser module from the light inlet to the exchange, convert the optical signal into an electrical signal, and then input the electrical signal to the exchange chip. FIG. 2B is a diagram of an architecture of an optical engine. The optical engine includes a microring modulator, a receive end, a transmit end, a laser end, and a photoelectric detector. The receive end of the optical engine is connected to a light inlet of an exchange, so that the receive end of the optical engine can receive input light of the exchange from the light inlet, demodulate the input light through the microring modulator, and then input the input light to the photoelectric detector. The photoelectric detector converts the input light into an electrical signal and then inputs the electrical signal to an exchange chip. In addition, an optical signal output by a laser module in the exchange may be input to the optical engine through the laser end. Then the microring modulator in the optical engine may modulate the optical signal, and output the modulated optical signal through the transmit end of the optical engine. Then the optical signal may be output through a light outlet of the exchange.

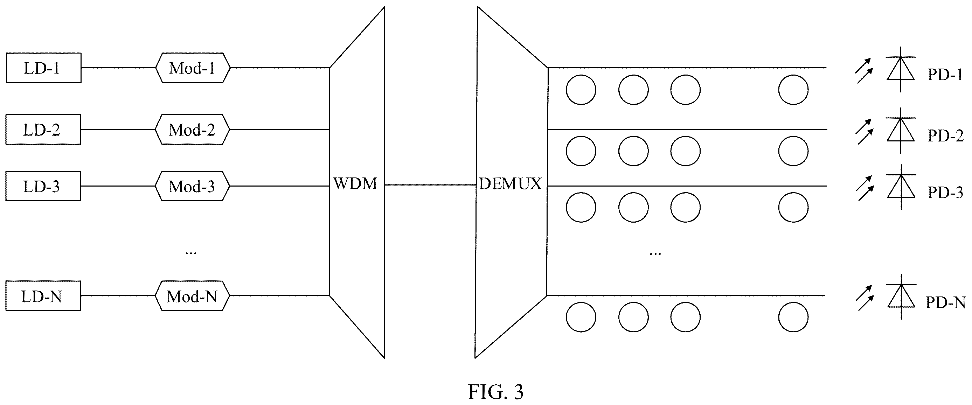

Example 2: FIG. 3 is a diagram of an architecture of an optical computing application scenario. The architecture includes N laser diodes (an LD-1, an LD-2, ..., and an LD-N), N microring modulators (a Mod-1, a Mod-2, ..., and a Mod-N), a wavelength division multiplexer (Wavelength Division Multiplexer, WDM), a wavelength division demultiplexer (Demultiplexer, DEMUX), and N photoelectric detectors (a PD-1, a PD-2, ..., and a PD-N). The N laser diodes output N optical signals with different wavelengths. After each of the N microring modulators modulates an optical signal corresponding to the microring modulator, a corresponding vector signal is obtained. The vector signals are multiplexed by the wavelength division multiplexer and then input to the wavelength division demultiplexer. The vector signals first pass through the wavelength division demultiplexer to obtain N optical signals. Then the N optical signals enter a microring matrix array, and are multiplied by N×N matrix elements. N optical signals obtained through multiplication are input to the N photoelectric detectors for addition. In this way, the N optical signals are modulated.

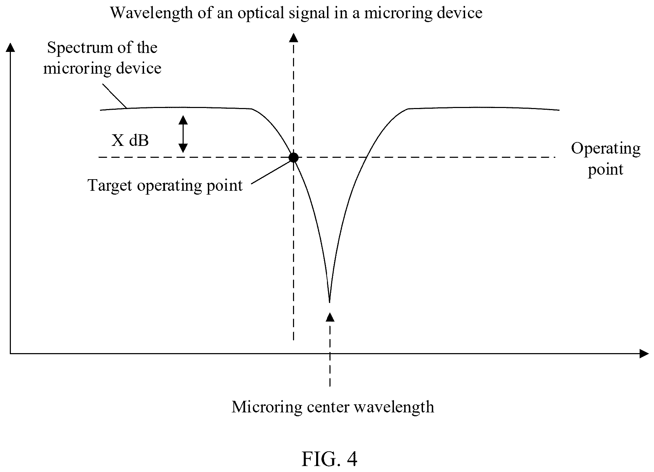

2. An operating point of a microring device is a location, in a transmission spectrum of a microring modulator, of a wavelength of an optical signal in the microring modulator. As shown in FIG. 4, a target operating point of a microring device is a crosspoint between a wavelength of an optical signal in the microring device and a spectrum of the microring device. The optical signal in the microring modulator is an optical signal received by the microring modulator.

The microring device is of a microring structure, and a spectral curve of the microring device is a Lorentzian curve. In addition, linearity of the spectral curve is poor, and control precision for an operating point is high. Therefore, the operating point of the microring device needs to be regulated.

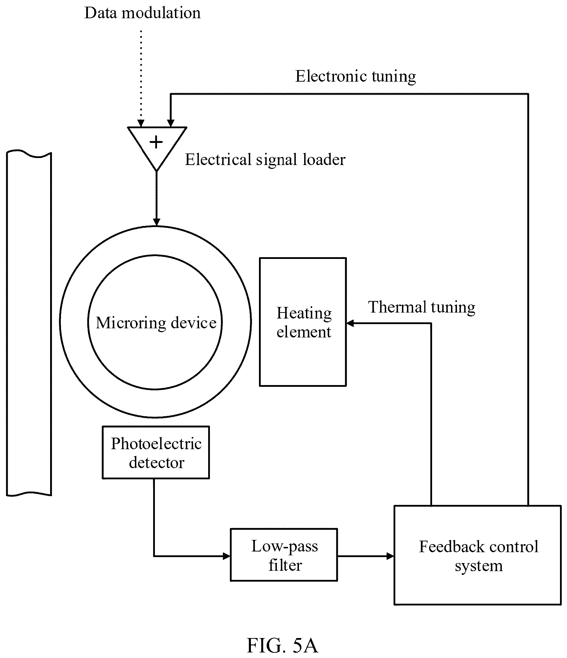

As shown in FIG. 5A, in some technical solutions, an adjustment and control system includes a microring device, a photoelectric detector, a low-pass filter, a heating element, a feedback control system, and an electrical signal loader. The photoelectric detector may monitor an optical signal in the microring device, convert the optical signal into a corresponding electrical signal, and then input the electrical signal to the low-pass filter. The low-pass filter performs corresponding processing on the electrical signal and then inputs the electrical signal to the feedback control system. In the system, regulation on the microring device includes coarse tuning and fine tuning. The coarse tuning is implemented through thermal tuning. For example, the feedback control system controls, based on the electrical signal input by the low-pass filter, the heating element to increase temperature of the microring device to target operating temperature. The fine tuning is implemented through electronic tuning. For example, the feedback control system controls, based on the electrical signal input by the low-pass filter, the electrical signal loader to load a corresponding electrical signal to implement electronic tuning, to compensate for a slight change in ambient temperature and a slight change caused by a manufacturing defect. However, a change in the optical signal detected by the photoelectric detector may be a change caused by a change in an operating point of the microring device, or may be a change in optical power of an optical signal input by a laser to the microring device. However, in this solution, power fluctuation of the optical signal input by the laser to the microring device cannot be identified or determined, and consequently, the photoelectric detector incorrectly determines that the operating point of the microring device changes, and further, the feedback control system inaccurately regulates the microring device.

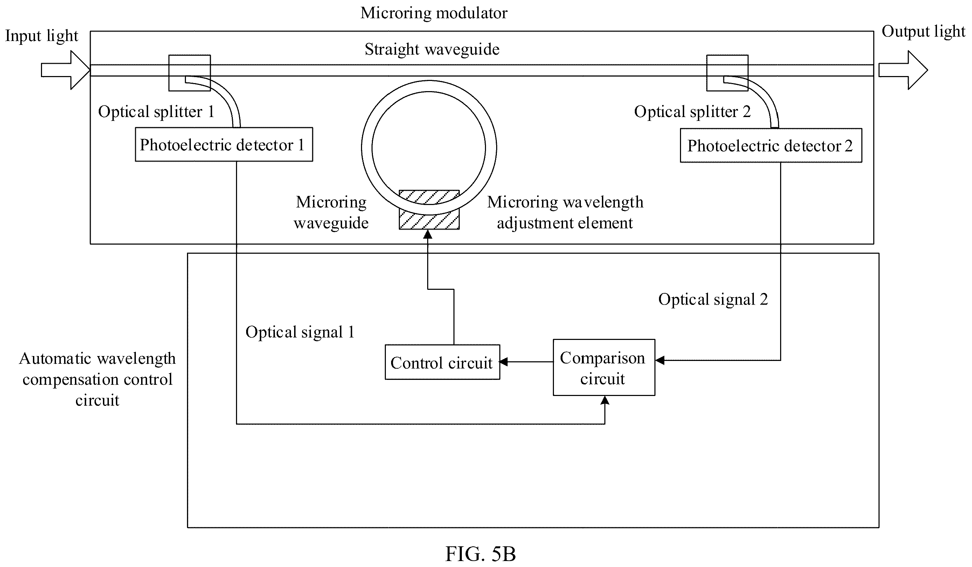

As shown in FIG. 5B, in some other technical solutions, an adjustment and control system includes a microring modulator and an automatic wavelength compensation control circuit. An optical splitter 1 is disposed at an input end of the microring modulator, an optical splitter 2 is disposed at an output end of the microring modulator, and a microring waveguide, a microring wavelength adjustment element, a photoelectric detector 1, and a photoelectric detector 2 are further disposed in the microring modulator. A control circuit and a comparison circuit are disposed in the automatic wavelength compensation control circuit. The photoelectric detector 1 may monitor an optical signal 1 output by the optical splitter 1, and input the optical signal 1 to the comparison circuit. The photoelectric detector 2 may monitor an optical signal 2 output by the optical splitter 2, and input the optical signal 2 to the comparison circuit. Then the comparison circuit may compare the optical signal 1 with the optical signal 2, and input a comparison result of the optical signal 1 and the optical signal 2 to the control circuit. Then the control circuit may control, based on the comparison result, the microring wavelength adjustment element to adjust an operating point of the microring waveguide, in other words, adjust an operating point of the microring modulator. In this technical solution, two photoelectric detectors and the comparison circuit need to be disposed, leading to high circuit complexity of the adjustment and control system. In addition, because the comparison circuit can only perform comparison between magnitudes but cannot obtain a specific variation, an additional integrator circuit further needs to be disposed to implement regulation on the microring modulator.

To sum up, in the foregoing technical solution, a circuit in the adjustment and control system is complex, and a control loop is complex, leading to high regulation costs.

In view of this, this application proposes an adjustment and control system and method, to simplify an operating point regulation process for a microring device, and reduce regulation costs of the microring device.

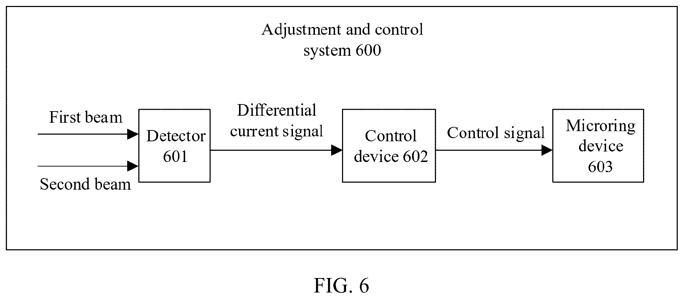

For example, FIG. 6 is a diagram of a structure of an adjustment and control system according to an embodiment of this application. The adjustment and control system 600 includes a detector 601, a control device 602, and a microring device 603. The detector 601 may receive a first beam and a second beam, perform optical-to-electrical conversion on the first beam to obtain a first current signal, and perform optical-to-electrical conversion on the second beam to obtain a second current signal. The detector 601 may further determine a differential current signal between the first current signal and the second current signal, and output the differential current signal to the control device 602. Then the control device 602 may receive the differential current signal, and determine a control signal corresponding to the differential current signal. The control signal may be used to adjust an operating point of the microring device 603, so that the microring device 603 can operate at a target operating point. The target operating point is a crosspoint between a wavelength of an optical signal in the microring device 603 and a spectrum of the microring device 603. The optical signal in the microring device 603 is an optical signal received by the microring device 603.

In this embodiment of this application, the detector 601 in the adjustment and control system 600 may receive the first beam and the second beam, and compare the first beam with the second beam. In this way, compared with a technical solution in which one detector monitors one optical signal and a signal comparison circuit is used to compare two optical signals detected by two detectors to regulate an operating point of a microring device, in this embodiment of this application, no signal comparison circuit needs to be additionally disposed in the adjustment and control system. This effectively reduces circuit complexity of the adjustment and control system, simplifies an operating point regulation process for the microring device, and reduces costs of the adjustment and control system.

Optionally, the detector 601 may be a device with an optical detection function and an optical-to-electrical conversion function, and may also be referred to as a photoelectric detector 601. In a possible implementation, the detector 601 may be an optical power meter or a balanced detector.

The control device 602 may be any chip or integrated circuit that has a computing capability. For example, the control device 602 may be a general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, or any combination thereof. The general-purpose processor may be a microprocessor, for example, a microcontroller unit (microcontroller unit, MCU), or may be another conventional processor.

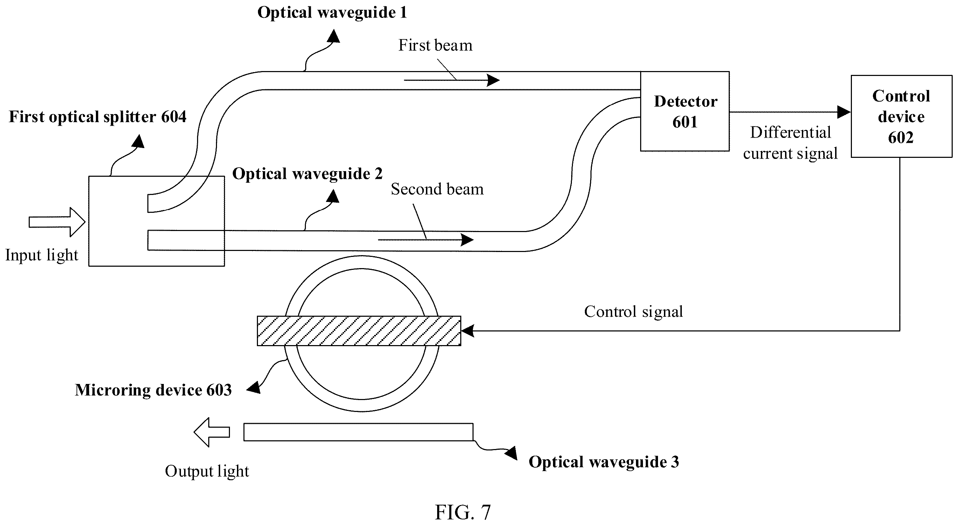

The following further describes the adjustment and control system 600 in detail with reference to FIG. 7 to FIG. 16C.

As described above, the detector 601 may receive the first beam and the second beam, where the first beam and the second beam may be obtained based on input light of the adjustment and control system 600, and the input light may be a beam input from a light source to the adjustment and control system 600. The light source may be a laser or another light source. This is not limited herein. The laser may be, for example, at least one of an edge-emitting laser (edge-emitting laser, EEL), a vertical-cavity surface-emitting laser (vertical-cavity surface-emitting laser, Vcsel), or a fiber laser (fiber laser).

The detector 601 may receive the first beam and the second beam in a plurality of manners, which are described below by using examples.

Manner 1: As shown in FIG. 7, the adjustment and control system 600 further includes a first optical splitter 604, an optical waveguide 1, an optical waveguide 2, and an optical waveguide 3. The optical waveguide 1 and the optical waveguide 2 are separately disposed between the first optical splitter 604 and the detector 601, and the optical waveguide 3 is disposed at a drop port of the microring device 603. Correspondingly, the first optical splitter 604 may receive the input light, and split the input light to obtain the first beam and the second beam. Then the first beam may be input to the detector 601 through the optical waveguide 1, and the second beam may be input to the detector 601 through the optical waveguide 2. The second beam may sequentially pass through the optical waveguide 2, the microring device 603, and the optical waveguide 3 to obtain output light, and the output light is output through the drop port of the microring device 603. In this way, two input signals for the detector 601 can be obtained by splitting the input light by one optical splitter. This effectively reduces complexity of the adjustment and control system 600 and reduces component costs of the adjustment and control system 600.

In a possible implementation, a split ratio of the first optical splitter 604 is determined based on the target operating point of the microring device 603. In this way, the split ratio of the first optical splitter 604 is flexibly designed based on the target operating point of the microring device 603, so that the microring device 603 can operate at the target operating point as much as possible, to reduce a quantity of times of adjusting the operating point of the microring device 603, and effectively reduce operation interruptions of the microring device 603.

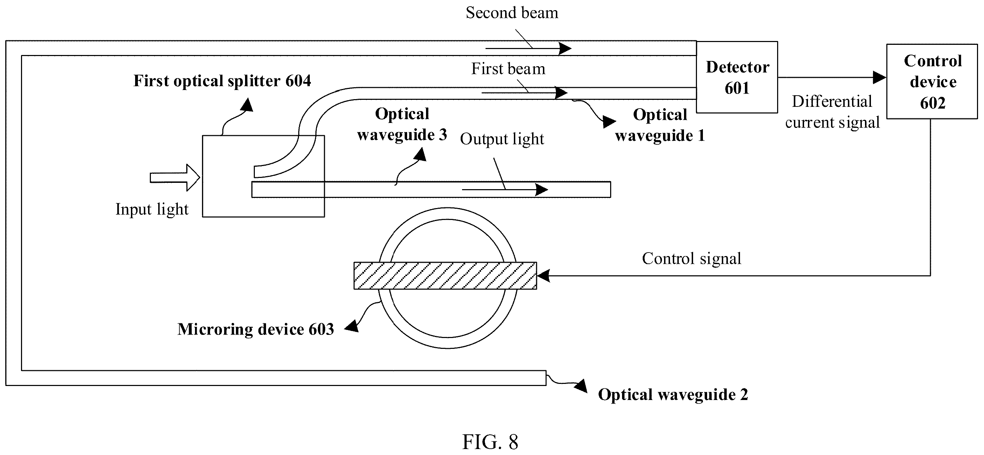

Manner 2: As shown in FIG. 8, the adjustment and control system 600 further includes a first optical splitter 604, an optical waveguide 1, an optical waveguide 2, and an optical waveguide 3. The optical waveguide 1 is disposed between the first optical splitter 604 and the detector 601, the optical waveguide 2 is located at a drop port of the microring device 603, and the optical waveguide 3 is disposed after the first optical splitter 604. Correspondingly, the first optical splitter 604 may receive the input light, and split the input light to obtain the first beam and output light. Then the first beam may be input to the detector 601 through the optical waveguide 1, and the output light may be output through the optical waveguide 3. The output light may further sequentially pass through the optical waveguide 3, the microring device 603, and the optical waveguide 2 to obtain the second beam, and the second beam may be input to the detector 601 through the optical waveguide 2. In this way, the first optical splitter splits the input light to obtain the first beam and the output light. The first beam is used as an input signal for the detector. In addition, the output light sequentially passes through the optical waveguide 3, the microring device 603, and the optical waveguide 2 to obtain the second beam, and the second beam is used as another input signal for the detector. To be specific, two input signals for the detector 601 can be obtained through one optical splitter, so that complexity of the adjustment and control system 600 is effectively reduced.

In a possible implementation, a split ratio of the first optical splitter 604 is determined based on the target operating point of the microring device 603, and/or a first coupling coefficient between the optical waveguide 2 and the microring device 603 is determined based on the target operating point of the microring device 603, and/or a second coupling coefficient between the optical waveguide 3 and the microring device 603 is determined based on the target operating point of the microring device 603. In this way, at least one of the split ratio of the first optical splitter 604, the first coupling coefficient between the optical waveguide 2 and the microring device 603, or the second coupling coefficient between the optical waveguide 3 and the microring device 603 is flexibly designed based on the target operating point, to reduce a quantity of times of adjusting the operating point of the microring device 603, and effectively reduce operation interruptions of the microring device 603. In a possible implementation, there is a first coupling coefficient between the optical waveguide 2 and the microring device 603, and there is a second coupling coefficient between the optical waveguide 3 and the microring device 603. The first coupling coefficient is related to a length of an optical waveguide that is in the optical waveguide 2 and that interacts with the microring device 603, and/or is related to a distance between the optical waveguide 2 and the microring device 603. The second coupling coefficient is related to a length of an optical waveguide that is in the optical waveguide 3 and that interacts with the microring device 603, and/or is related to a distance between the optical waveguide 3 and the microring device 603. In this way, a plurality of manners of determining the first coupling coefficient and the second coupling coefficient are provided, so that the first coupling coefficient and the second coupling coefficient can be flexibly determined. For example, a larger length of the optical waveguide that is in the optical waveguide 2 and that interacts with the microring device 603 indicates a larger first coupling coefficient, and a larger distance between the optical waveguide 2 and the microring device 603 indicates a smaller first coupling coefficient. A larger length of the optical waveguide that is in the optical waveguide 3 and that interacts with the microring device 603 indicates a larger second coupling coefficient, and a larger distance between the optical waveguide 3 and the microring device 603 indicates a smaller second coupling coefficient.

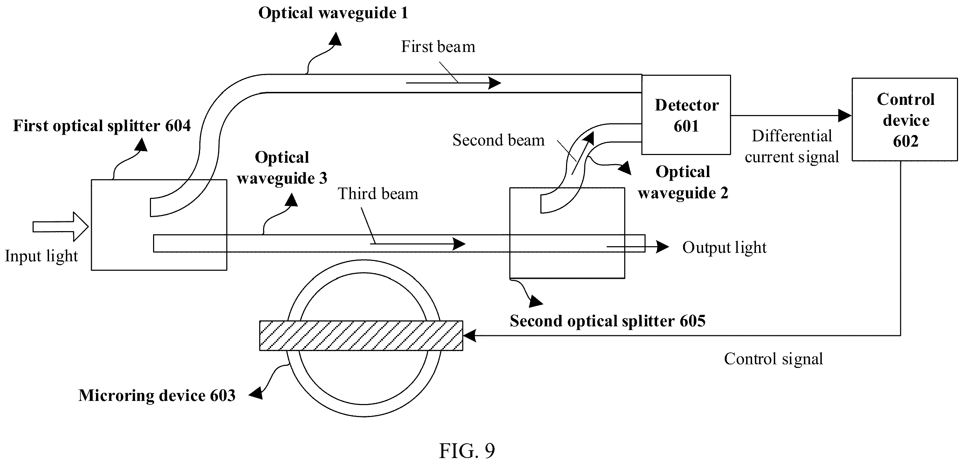

Manner 3: As shown in FIG. 9, the adjustment and control system 600 further includes a first optical splitter 604, a second optical splitter 605, an optical waveguide 1, an optical waveguide 2, and an optical waveguide 3. The optical waveguide 1 is disposed between the first optical splitter 604 and the detector 601, the optical waveguide 2 is disposed between the second optical splitter 605 and the detector 601, and the optical waveguide 3 is disposed between the first optical splitter 604 and the second optical splitter 605. Correspondingly, the first optical splitter 604 receives the input light, and splits the input light to obtain the first beam and a third beam. Then the first beam may be input to the detector 601 through the optical waveguide 1, and the third beam may be input to the second optical splitter 605 through the optical waveguide 3. The second optical splitter 605 receives the third beam, and splits the third beam to obtain the second beam and output light. Then the second beam may be input to the detector 601 through the optical waveguide 2, and the output light is output through the optical waveguide 3.

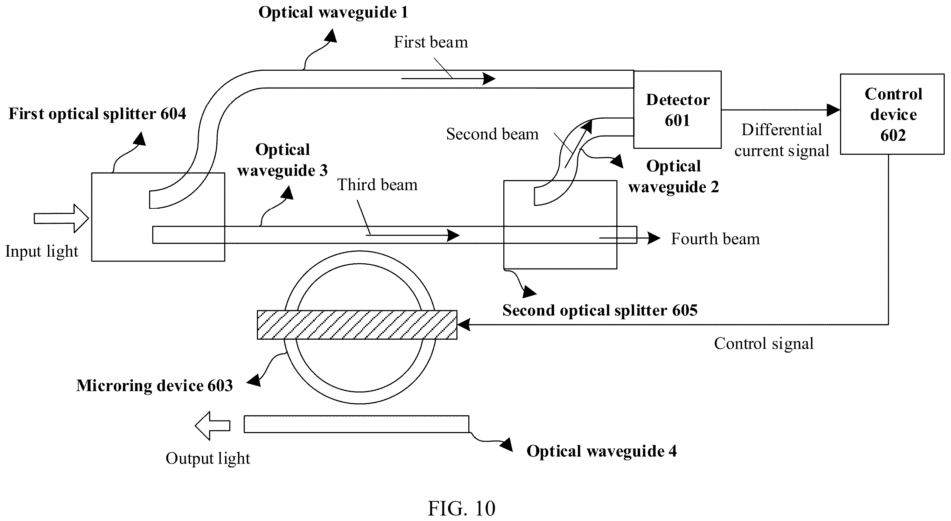

Manner 4: As shown in FIG. 10, the adjustment and control system 600 further includes a first optical splitter 604, a second optical splitter 605, an optical waveguide 1, an optical waveguide 2, an optical waveguide 3, and an optical waveguide 4. The optical waveguide 1 is disposed between the first optical splitter 604 and the detector 601, the optical waveguide 2 is disposed between the second optical splitter 605 and the detector 601, the optical waveguide 3 is disposed between the first optical splitter 604 and the second optical splitter 605, and the optical waveguide 4 is located at a drop port of the microring device 603. Correspondingly, the first optical splitter 604 receives the input light, and splits the input light to obtain the first beam and a third beam. Then the first beam may be input to the detector 601 through the optical waveguide 1, and the third beam may be input to the second optical splitter 605 through the optical waveguide 3. The second optical splitter 605 receives the third beam, and splits the third beam to obtain the second beam and a fourth beam. Then the second beam may be input to the detector 601 through the optical waveguide 2, and the fourth beam may be output through the optical waveguide 3. The third beam may sequentially pass through the optical waveguide 3, the microring device 603, and the optical waveguide 4 to obtain output light, and the output light is output through the drop port of the microring device 603.

In the manner 3 and the manner 4, the first optical splitter 604 and the second optical splitter 605 are disposed in the adjustment and control system 600, and two input signals for the detector 601 are obtained through the first optical splitter 604 and the second optical splitter 605. This facilitates regulation on the two input signals. A difference between the manner 3 and the manner 4 lies in that, the output light in the manner 3 is obtained by the second optical splitter 605 by splitting the third beam; and the output light in the manner 4 is obtained after the third beam sequentially passes through the optical waveguide 3, the microring device 603, and the optical waveguide 4, and the output light is output through the drop port of the microring device 603. In this way, a plurality of implementations of the output light are provided, so that the technical solution in this embodiment of this application can be flexibly implemented.

In a possible implementation, a split ratio of the first optical splitter 604 is determined based on the target operating point, and/or a split ratio of the second optical splitter 605 is determined based on the target operating point. In this way, the split ratio of the first optical splitter and/or the split ratio of the second optical splitter can be flexibly designed based on the target operating point, so that the microring device 603 can operate at the target operating point as much as possible, to reduce a quantity of times of adjusting the operating point of the microring device 603, and effectively reduce operation interruptions of the microring device 603. For example, the target operating point of the microring device 603 is X. Assuming that the split ratio of the first optical splitter 604 is K1 and optical power of the input light is Pin, optical power of the first beam is K1×Pin, and optical power of the third beam is (1-K1)×Pin. Assuming that the split ratio of the second optical splitter 605 is K2, optical power of the second beam is (1-K1)×Pin×K2. Therefore, when K1×Pin=(1-K1)×Pin×K2×10^(-X/10), the differential current signal corresponding to the first beam and the second beam is 0, in other words, the microring device 603 operates at the target operating point. In this case, the operating point of the microring device 603 does not need to be regulated.

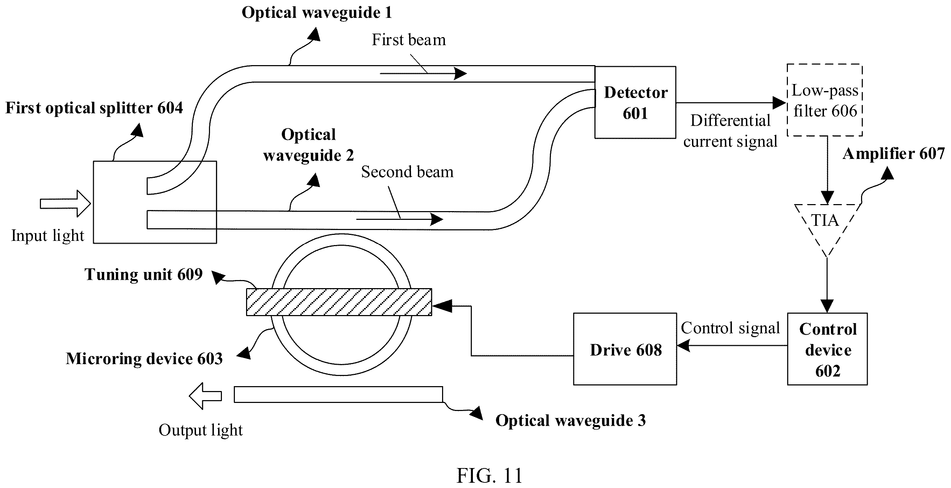

Optionally, as shown in FIG. 11, the adjustment and control system 600 may further include a trans-impedance amplifier 607. The trans-impedance amplifier (trans-impedance amplifier, TIA) 607 is disposed between the detector 601 and the control device 602. Correspondingly, the detector 601 may further input the differential current signal to the trans-impedance amplifier 607. Further, before the control device 602 receives the differential current signal, the trans-impedance amplifier 607 may amplify the differential current signal, and then input the amplified differential current signal to the control device 602. In this way, the differential current signal received by the control device 602 is more accurate, and the control signal corresponding to the differential current signal regulates the microring device 603 more accurately.

Optionally, still as shown in FIG. 11, the adjustment and control system 600 further includes a low-pass filter 606. The low-pass filter 606 is disposed between the detector 601 and the trans-impedance amplifier 607. Correspondingly, the detector 601 may input the differential current signal to the low-pass filter 606. Then the low-pass filter 606 may filter the differential current signal, and then input the processed differential current signal to the trans-impedance amplifier 607. In this way, the differential current signal received by the trans-impedance amplifier 607 can be more accurate.

In a possible implementation, the adjustment and control system 600 further includes a drive 608. The drive 608 is disposed between the control device 602 and the microring device 603, and one end of the drive 608 is connected to the microring device 603. The control signal may indicate a drive voltage of the drive 608. The control device 602 may further send the control signal to the drive 608. The drive 608 receives the control signal, and adjusts the operating point of the microring device 603 based on the drive voltage. In this way, the control device 602 adjusts the operating point of the microring device 603 through the drive, so that regulation on the microring device 603 is easy to implement.

Still as shown in FIG. 11, in a possible implementation, the adjustment and control system 600 further includes a tuning unit 609. The tuning unit 609 is disposed on the microring device 603, and one end of the drive 608 is connected to the tuning unit 609. Correspondingly, that the drive 608 adjusts the operating point of the microring device 603 based on the drive voltage includes: The drive 608 adjusts a voltage value or a current value of the tuning unit 609 based on the drive voltage, to adjust the operating point of the microring device 603. In this way, the drive 608 can adjust the voltage value or the current value of the tuning unit 609 based on the drive voltage indicated by the control signal, to make the operating point of the microring device 603 be the target operating point. For example, the tuning unit 609 is a heater, and the drive 608 may adjust the voltage value or the current value of the tuning unit 609 based on the drive voltage, to adjust operating temperature of the microring device 603, and further regulate the operating point of the microring device 603.

In this embodiment of this application, the control device 602 may be a controller integrated with a processor, or may be a chip or a circuit that has a regulation function. Therefore, the control device 602 has a plurality of implementations, which are described below by using examples.

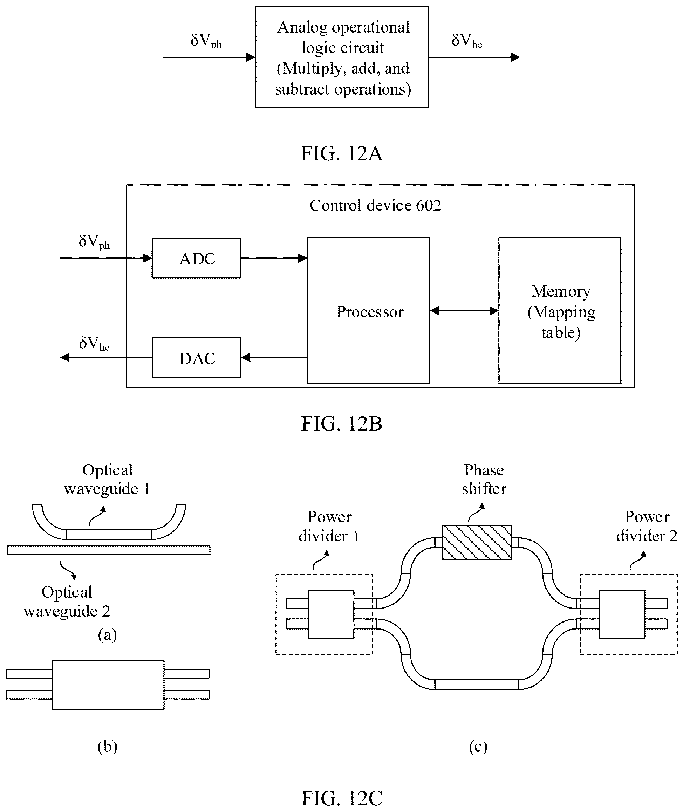

Example 1: An analog operational logic circuit shown in FIG. 12A may be disposed in the control device 602. Input for the analog operational logic circuit is a voltage value δVₚₕ of the differential current signal received by the control device 602. Output of the analog operational logic circuit is a voltage value δVₕₑ (to be specific, the drive voltage indicated by the control signal) that is input by the control device 602 to the drive 608. Correspondingly, a function relationship is set for the analog operational logic circuit: f(δVₚₕ)=δVₕₑ. In this way, after the control device 602 receives the differential current signal, if the voltage value of the differential current signal is greater than a preset value (for example, a zero value), the operating point of the microring device 603 needs to be adjusted, and then the control device 602 may perform a corresponding operation on the differential current signal based on the function relationship, to obtain a specific value corresponding to the drive voltage indicated by the control signal corresponding to the differential current signal. If the voltage value of the differential current signal is less than or equal to a preset value (for example, a zero value), the operating point of the microring device 603 does not need to be adjusted.

Example 2: A structure of the control device 602 may be shown in FIG. 12B. The control device 602 includes an analog-to-digital converter (Analog-to-Digital converter, ADC), a digital-to-analog converter (Digital-to-Analog Converter, DAC), a processor, and a memory. After the control device 602 receives the differential current signal, the ADC performs corresponding analog-to-digital conversion on the differential current signal to obtain a voltage value δVₚₕ corresponding to the differential current signal, and the ADC inputs the voltage value δVₚₕ to the processor. If the voltage value of the differential current signal is greater than a preset value (for example, a zero value), the operating point of the microring device 603 needs to be adjusted. The memory stores a mapping table between the voltage value δVₚₕ and a drive voltage δVₕₑ of the drive. Then the processor may determine, based on the mapping table, the drive voltage of the drive that corresponds to the voltage value δVₚₕ, and perform digital-to-analog conversion on the drive voltage of the drive to obtain the control signal corresponding to the differential current signal. If the voltage value of the electrical signal is less than or equal to a preset value (for example, a zero value), the operating point of the microring device 603 does not need to be adjusted. Optionally, the memory may be disposed outside the control device 602.

In addition, in this embodiment of this application, the first optical splitter 604 and the second optical splitter 605 are components with an optical splitting function, and perform a power distribution function, and a specific structure is not limited. For example, one or more of a directional coupler shown in (a) in FIG. 12C, a multimode interferometer shown in (b) in FIG. 12C, or a Mach-Zehnder interferometer (MZI) shown in (c) in FIG. 12C may be used.

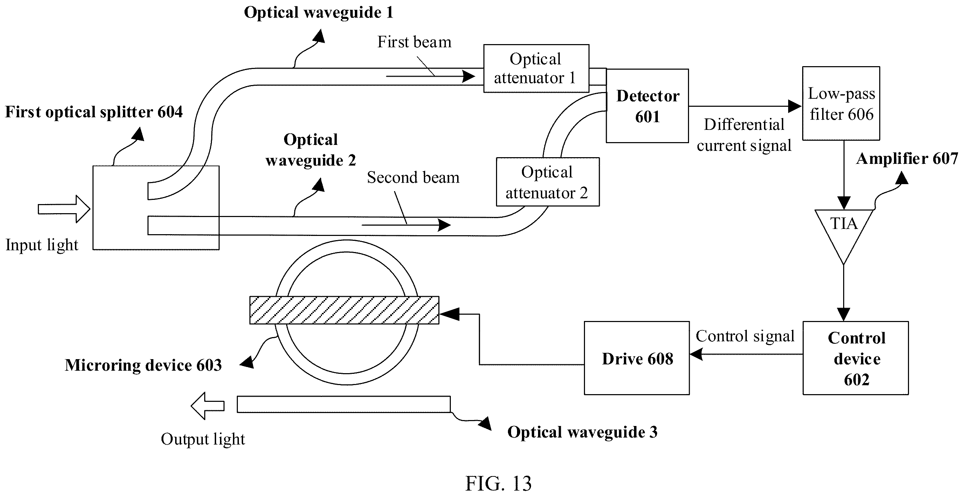

Optionally, as shown in FIG. 13, the adjustment and control system 600 further includes an optical attenuator 1 and an optical attenuator 2. The optical attenuator 1 and the optical attenuator 2 are disposed between the first optical splitter 604 and the detector 601. For example, the optical attenuator 1 may be disposed on the optical waveguide 1, and the optical attenuator 2 may be disposed on the optical waveguide 2. Correspondingly, before the detector 601 receives the first beam, the optical attenuator 1 may adjust light intensity of the first beam, and input the adjusted first beam to the detector 601; and before the detector 601 receives the second beam, the optical attenuator 2 may adjust light intensity of the second beam, and input the adjusted second beam to the detector 601. In this way, the light intensity of the first beam and the second beam is adjusted before the detector 601 receives the first beam and the second beam, so that the differential current signal corresponding to the first beam and the second beam can be close to zero as much as possible, and the microring device 603 operates at the target operating point. It can be understood that the optical attenuator 1 and the optical attenuator 2 may also be designed in the adjustment and control system 600 shown in FIG. 7 to FIG. 11, and specific functions of the optical attenuator 1 and the optical attenuator 2 are the same as those described in FIG. 13. Details are not described herein again.

It can be understood that there may be one or more microring devices 603 in this embodiment of this application. In other words, the control device 602 in the adjustment and control system 600 can regulate an operating point or operating points of one or more microring devices 603.

In a possible implementation, the adjustment and control system 600 further includes an optical switch, and the optical switch may be configured to control whether to input the second beam to the detector 601. In this way, in a scenario in which there are a plurality of microring devices, a plurality of optical switches may be disposed in the adjustment and control system 600. Each optical switch corresponds to one second beam. Each optical switch may control whether to input, to the detector 601, a second beam corresponding to the optical switch. In this way, regulation on operating points of the plurality of microring modulators is implemented.

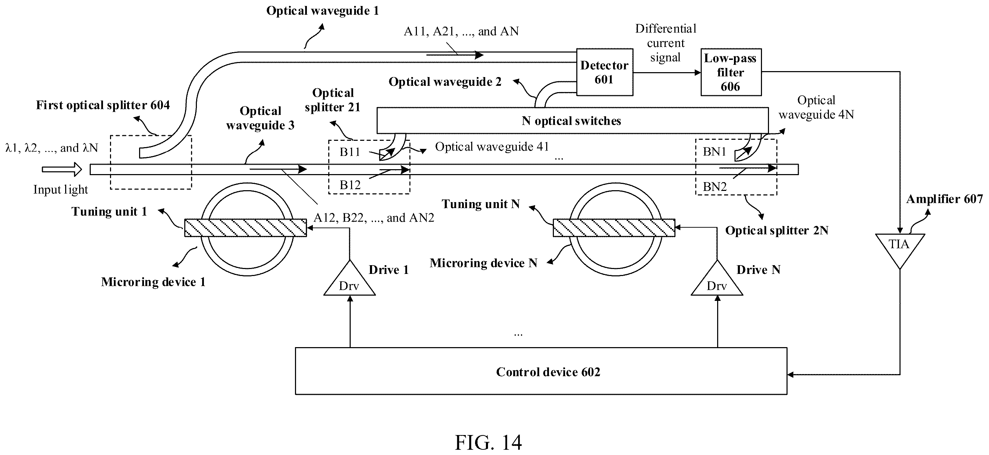

FIG. 14 is a diagram of another possible structure of an adjustment and control system 600 according to an embodiment of this application. The adjustment and control system 600 includes a detector 601, a control device 602, N microring devices (a microring device 1, a microring device 2, ..., and a microring device N shown in FIG. 14), a first optical splitter 604, N second optical splitters (an optical splitter 21, an optical splitter 22, ..., and an optical splitter 2N shown in FIG. 14), a low-pass filter 606, an amplifier 607, N optical switches, N drives (a drive 1, a drive 2, ..., and a drive N shown in FIG. 14), and N tuning units (a tuning unit 1, a tuning unit 2, ..., and a tuning unit N shown in FIG. 14). One of the N microring devices corresponds to one of the N second optical splitters. One of the N second optical splitters 605 corresponds to one of the N optical switches. One of the N microring devices corresponds to one of the N drives. One of the N drives corresponds to one of the N tuning units. For example, the microring device 1 corresponds to the optical splitter 21, the optical splitter 21 corresponds to the optical switch 1, the microring device 1 corresponds to the drive 1, and the drive 1 corresponds to the tuning unit 1; and the microring device 2 corresponds to the optical splitter 22, the optical splitter 22 corresponds to the optical switch 2, the microring device 2 corresponds to the drive 2, and the drive 2 corresponds to the tuning unit 2. By analogy, the microring device N corresponds to the optical splitter 2N, the optical splitter 2N corresponds to the optical switch N, the microring device N corresponds to the drive N, and the drive N corresponds to the tuning unit N.

In a possible implementation, still as shown in FIG. 14, the adjustment and control system 600 further includes an optical waveguide 1, an optical waveguide 2, an optical waveguide 3, an optical waveguide 41, an optical waveguide 42, ..., and an optical waveguide 4N. The optical waveguide 1 is disposed between the first optical splitter 604 and the detector 601. The optical waveguide 2 is disposed between the N optical switches and the detector 601. The optical waveguide 3 is disposed between the first optical splitter 604 and the optical splitter 2N, and the optical waveguide 3 passes through the optical splitter 21, the optical splitter 22, ..., and the optical splitter 2N-1. The optical waveguide 41 is disposed between the optical splitter 21 and the optical switch 1, the optical waveguide 42 is disposed between the optical splitter 22 and the optical switch 2, ..., and the optical waveguide 4N is disposed between the optical splitter 2N and the optical switch N. Correspondingly, the first optical splitter 604 may receive input light λ1, and split the input light λ1 to obtain a beam A11 and a beam A12. Then the beam A11 is input to the detector 601 through the optical waveguide 1, and the beam A12 is input to the optical splitter 21 through the optical waveguide 3. The optical splitter 21 receives the beam A12, and splits the beam A12 to obtain a beam B11 and output light B12. The beam B11 is input to the optical switch 1 through the optical waveguide 41, and the output light B12 is output through the optical waveguide 3. Then the optical switch 1 may control whether to input the beam B11 to the detector 601. When the optical switch 1 is in an on state, the beam B11 is input to the detector 601 through the optical waveguide 2. Similarly, the first optical splitter 604 may receive input light λ2, and split the input light λ2 to obtain a beam A21 and a beam A22. Then the beam A21 is input to the detector 601 through the optical waveguide 1, and the beam A22 is input to the optical splitter 21 through the optical waveguide 3. The optical splitter 22 receives the beam A22, and splits the beam A22 to obtain a beam B21 and output light B22. The beam B21 is input to the optical switch 2 through the optical waveguide 42, and the output light B22 is output through the optical waveguide 3. Then the optical switch 2 may control whether to input the beam B21 to the detector 601. When the optical switch 2 is in an on state, the beam B21 is input to the detector 601 through the optical waveguide 2. By analogy, the first optical splitter 604 may receive input light λN, and split the input light λN to obtain a beam AN1 and a beam AN2. Then the beam AN1 is input to the detector 601 through the optical waveguide 1, and the beam AN2 is input to the optical splitter 2N through the optical waveguide 3. The optical splitter 2N receives the beam AN2, and splits the beam AN2 to obtain a beam BN1 and output light BN2. The beam BN1 is input to the optical switch N through the optical waveguide 4N, and the output light BN2 is output through the optical waveguide 3. Then the optical switch N may control whether to input the beam BN1 to the detector 601. When the optical switch N is in an on state, the beam BN1 is input to the detector 601 through the optical waveguide 2.

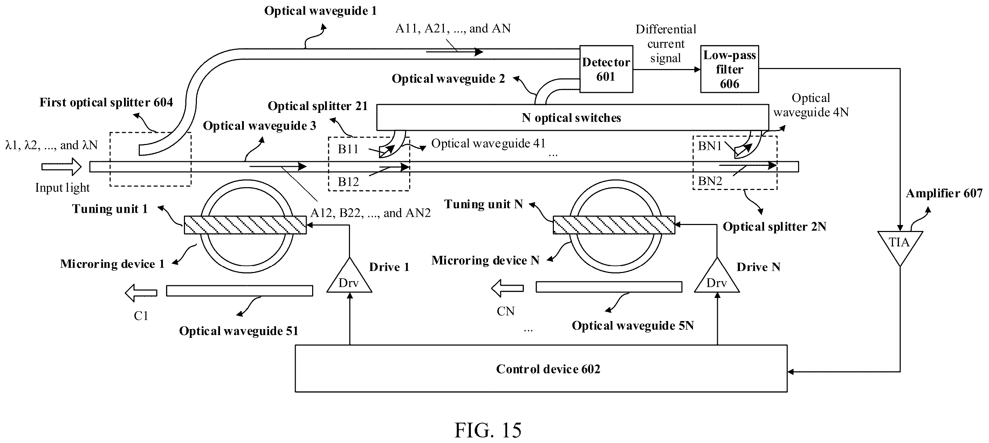

As shown in FIG. 15, in another possible implementation, the adjustment and control system 600 further includes an optical waveguide 1, an optical waveguide 2, an optical waveguide 3, an optical waveguide 41, an optical waveguide 42, ..., an optical waveguide 4N, an optical waveguide 51, an optical waveguide 52, ..., and an optical waveguide 5N. The optical waveguide 1 is disposed between the first optical splitter 604 and the detector 601. The optical waveguide 2 is disposed between the N optical switches and the detector 601. The optical waveguide 3 is disposed between the first optical splitter 604 and the optical splitter 2N, and the optical waveguide 3 passes through the optical splitter 21, the optical splitter 22, ..., and the optical splitter 2N-1. The optical waveguide 41 is disposed between the optical splitter 21 and the optical switch 1, the optical waveguide 42 is disposed between the optical splitter 22 and the optical switch 2, ..., and the optical waveguide 4N is disposed between the optical splitter 2N and the optical switch N. The optical waveguide 51 is located at a drop port of the microring device 1, the optical waveguide 52 is located at a drop port of the microring device 2, ..., and the optical waveguide 5N is located at a drop port of the microring device N. Correspondingly, the first optical splitter 604 may receive input light λ1, and split the input light λ1 to obtain a beam A11 and a beam A12. Then the beam A11 is input to the detector 601 through the optical waveguide 1, and the beam A12 is input to the optical splitter 21 through the optical waveguide 3. The optical splitter 21 receives the beam A12, and splits the beam A12 to obtain a beam B12 and a beam B12. The beam B11 is input to the optical switch 1 through the optical waveguide 41. The beam B12 sequentially passes through the optical waveguide 3, the microring device 1, and the optical waveguide 51 to obtain output light C1, and the output light C1 is output through the drop port of the microring device 1. Then the optical switch 1 may control whether to input the beam B11 to the detector 601. When the optical switch 1 is in an on state, the beam B11 is input to the detector 601 through the optical waveguide 2. Similarly, the first optical splitter 604 may receive input light λ2, and split the input light λ2 to obtain a beam A21 and a beam A22. Then the beam A21 is input to the detector 601 through the optical waveguide 1, and the beam A22 is input to the optical splitter 22 through the optical waveguide 3. The optical splitter 22 receives the beam A22, and splits the beam A22 to obtain a beam B22 and a beam B22. The beam B21 is input to the optical switch 2 through the optical waveguide 42. The beam B22 sequentially passes through the optical waveguide 3, the microring device 2, and the optical waveguide 52 to obtain output light C2, and the output light C2 is output through the drop port of the microring device 2. Then the optical switch 2 may control whether to input the beam B21 to the detector 601. When the optical switch 2 is in an on state, the beam B21 is input to the detector 601 through the optical waveguide 2. By analogy, the first optical splitter 604 may receive input light λN, and split the input light λN to obtain a beam AN1 and a beam AN2. Then the beam AN1 is input to the detector 601 through the optical waveguide 1, and the beam AN2 is input to the optical splitter 2N through the optical waveguide 3. The optical splitter 2N receives the beam AN2, and splits the beam AN2 to obtain a beam BN2 and a beam BN2. The beam BN1 is input to the optical switch N through the optical waveguide 4N. The beam BN2 sequentially passes through the optical waveguide 3, the microring device N, and the optical waveguide 5N to obtain output light CN, and the output light CN is output through the drop port of the microring device N. Then the optical switch N may control whether to input the beam BN1 to the detector 601. When the optical switch N is in an on state, the beam BN1 is input to the detector 601 through the optical waveguide N.

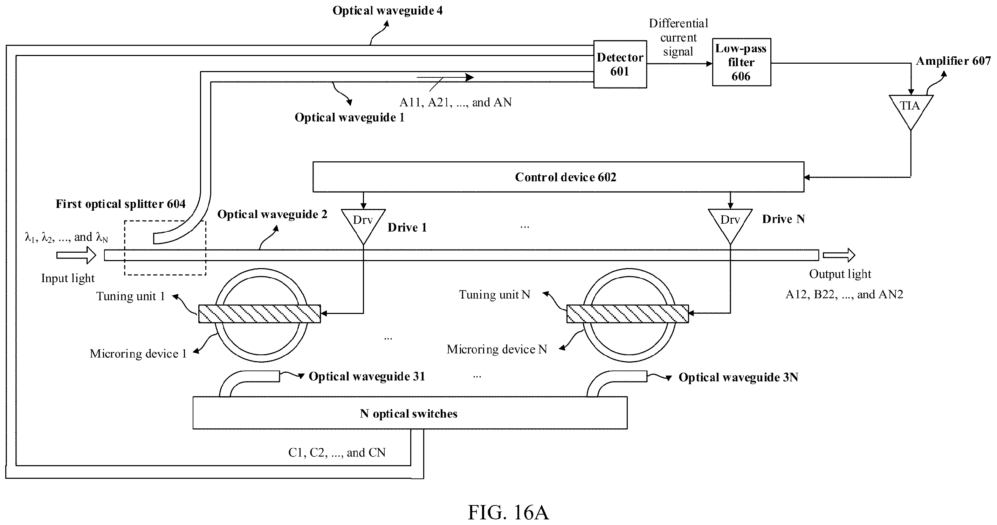

FIG. 16A is a diagram of another possible structure of an adjustment and control system 600 according to an embodiment of this application. A difference between FIG. 16A and FIG. 14 lies in that the adjustment and control system 600 in FIG. 16A is not provided with N second optical splitters. The adjustment and control system 600 shown in FIG. 16A includes an optical waveguide 1, an optical waveguide 2, an optical waveguide 31, an optical waveguide 32, ..., an optical waveguide 3N, and an optical waveguide 4. The optical waveguide 1 is disposed between the first optical splitter 604 and the detector 601. The optical waveguide 2 is disposed after the first optical splitter 604. The optical waveguide 31 is disposed between the microring device 1 and the optical switch 1, and the optical waveguide 31 is located at a drop port of the microring device 1. The optical waveguide 32 is disposed between the microring device 2 and the optical switch 2, and the optical waveguide 32 is located at a drop port of the microring device 2. By analogy, the optical waveguide 3N is disposed between the microring device N and the optical switch N, and the optical waveguide 3N is located at a drop port of the microring device N. The optical waveguide 4 is disposed between the N optical switches and the detector 601. Correspondingly, the first optical splitter 604 may receive input light λ1, and split the input light λ1 to obtain a beam A11 and output light A12. Then the beam A11 is input to the detector 601 through the optical waveguide 1, and the output light A12 is output through the optical waveguide 2. The output light A12 sequentially passes through the optical waveguide 2, the microring device 1, and the optical waveguide 31 to obtain a beam C1. Then the optical switch 1 may control whether to input the beam C1 to the detector 601. When the optical switch 1 is in an on state, the beam C1 is input to the detector 601 through the optical waveguide 4. Similarly, the first optical splitter 604 may receive input light λ2, and split the input light λ2 to obtain a beam A21 and output light A22. Then the beam A21 is input to the detector 601 through the optical waveguide 1, and the output light A22 is output through the optical waveguide 2. The output light A22 sequentially passes through the optical waveguide 2, the microring device 2, and the optical waveguide 32 to obtain a beam C2. Then the optical switch 2 may control whether to input the beam C2 to the detector 601. When the optical switch 2 is in an on state, the beam C2 is input to the detector 601 through the optical waveguide 4. By analogy, the first optical splitter 604 may receive input light λN, and split the input light λN to obtain a beam AN1 and output light AN2. Then the beam AN1 is input to the detector 601 through the optical waveguide 1, and the output light AN2 is output through the optical waveguide 2. The output light AN2 sequentially passes through the optical waveguide 2, the microring device N, and the optical waveguide 3N to obtain a beam CN. Then the optical switch N may control whether to input the beam CN to the detector 601. When the optical switch N is in an on state, the beam CN is input to the detector 601 through the optical waveguide 4.

Correspondingly, in FIG. 14 to FIG. 16A, the detector 601 may receive N first beams and N second beams. One of the N first beams corresponds to one of the N second beams. The detector 601 may perform optical-to-electrical conversion on any one of the N first beams to obtain a first current signal, perform optical-to-electrical conversion on a second beam corresponding to the first beam to obtain a second current signal, determine a differential current signal between the first current signal and the second current signal, and input the differential current signal into the low-pass filter 606. The low-pass filter 606 may perform corresponding processing on the differential current signal, and then input the differential current signal to the amplifier 607. The amplifier 607 amplifies the differential current signal, and then inputs the differential current signal to the control device 602. The control device 602 receives the differential current signal, determines a control signal corresponding to the differential current signal, and sends the control signal to a drive corresponding to a microring device corresponding to any first beam. The drive may adjust an operating point of the microring device based on the control signal, so that the microring device operates at a target operating point. For example, the microring device 1 in FIG. 16A is used as an example. The detector 601 may receive the beam A11 (namely, the first beam) and the beam C1 (namely, the second beam), determine a differential current signal corresponding to the beam A11 (namely, the first beam) and the beam C1 (namely, the second beam), and input the differential current signal to the low-pass filter 606. The low-pass filter 606 may perform corresponding processing on the differential current signal, and then input the differential current signal to the amplifier 607. The amplifier 607 amplifies the differential current signal, and then inputs the differential current signal to the control device 602. The control device 602 receives the differential current signal, determines a control signal corresponding to the differential current signal, and sends the control signal to the drive 1. The drive 1 may adjust an operating point of the microring device 1 based on the control signal, so that the microring device 1 operates at a target operating point.

It can be understood that the low-pass filter 606 and the amplifier 607 in FIG. 14 to FIG. 16A are optional.

Optionally, a first attenuator and a second attenuator may be further disposed in the adjustment and control system 600 shown in any one of FIG. 14 to FIG. 16A. The first attenuator is configured to adjust light intensity of the N first beams, and the second attenuator is configured to adjust light intensity of the N second beams. In this way, a differential current signal corresponding to the first beam and the second beam can be close to zero as much as possible, so that a microring device operates at a target operating point. The first attenuator may include one or more attenuators. The second attenuator may include one or more attenuators. A quantity of attenuators included in the first attenuator is the same as or different from a quantity of attenuators included in the second attenuator.

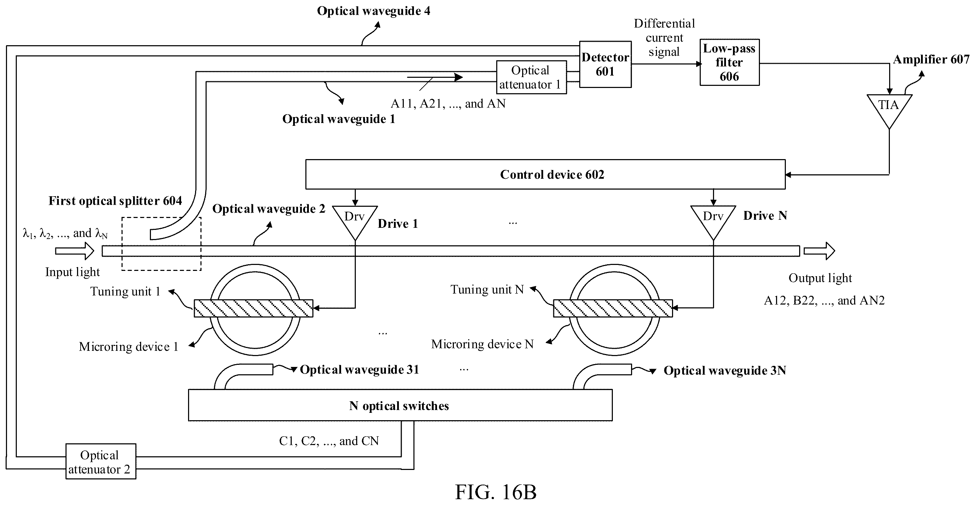

Example 1: As shown in FIG. 16B, the adjustment and control system 600 further includes an optical attenuator 1 and an optical attenuator 2. The optical attenuator 1 is disposed on the optical waveguide 1 between the first optical splitter 604 and the detector 601. The optical attenuator 2 is disposed on the optical waveguide 4 between the N optical switches and the detector 601.

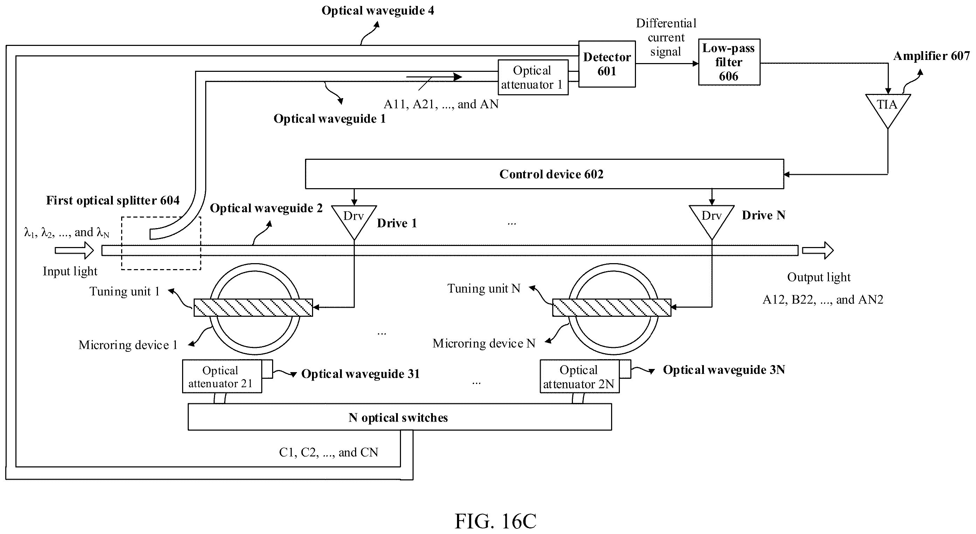

Example 2: As shown in FIG. 16C, the adjustment and control system 600 further includes an optical attenuator 1 and N optical attenuators 2 (an attenuator 21, an attenuator 21, ..., and an attenuator 2N). The optical attenuator 1 is disposed on the optical waveguide 1 between the first optical splitter 604 and the detector 601, the optical attenuator 21 is disposed on the optical waveguide 31 between the N optical switches and the microring device 1, the optical attenuator 22 is disposed on the optical waveguide 32 between the N optical switches and the microring device 2, ..., and the optical attenuator 2N is disposed on the optical waveguide 3N between the N optical switches and the microring device N.

It can be learned from the foregoing descriptions that, when the plurality of microring devices (the microring device 1, the microring device 2, ..., and the microring device N) in FIG. 14 to FIG. 16C are cascaded, the plurality of microring devices (the microring device 1, the microring device 2, ..., and the microring device N) share one set of control loop (to be specific, a control loop including the detector 601 and the control device 602). The control device 602 can efficiently adjust operating points of the plurality of microring devices (the microring device 1, the microring device 2, ..., and the microring device N). In addition, a quantity of components in the adjustment and control system 600 is reduced. This effectively reduces complexity of the adjustment and control system 600, so that the adjustment and control system 600 is easy to implement.

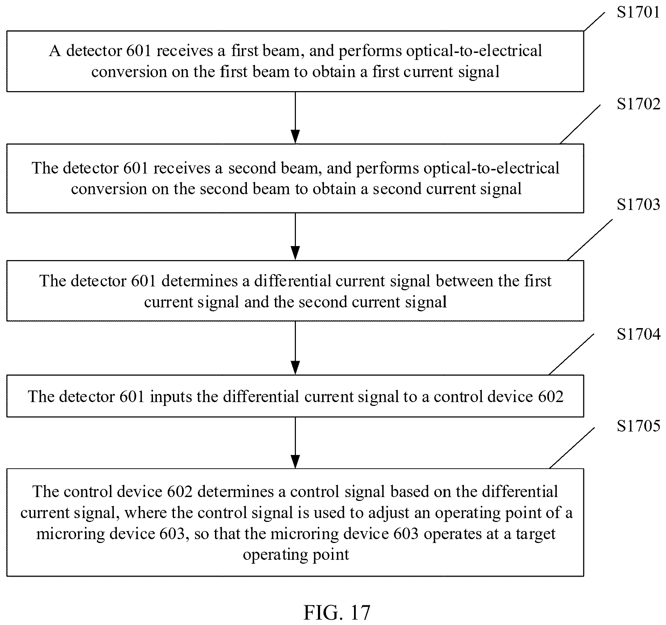

Based on the foregoing content and a same concept, an embodiment of this application further provides an adjustment and control method. The method is performed by the adjustment and control system 600 shown in any one of FIG. 6 to FIG. 11, or FIG. 13. As shown in FIG. 17, the method includes the following steps.

S1701: The detector 601 receives a first beam, and performs optical-to-electrical conversion on the first beam to obtain a first current signal.

S1702: The detector 601 receives a second beam, and performs optical-to-electrical conversion on the second beam to obtain a second current signal.

The first beam and the second beam are obtained based on input light of the adjustment and control system 600.

S1703: The detector 601 determines a differential current signal between the first current signal and the second current signal.

S1704: The detector 601 inputs the differential current signal to the control device 602. Correspondingly, the control device 602 receives the differential current signal.

S1705: The control device 602 determines a control signal based on the differential current signal, where the control signal is used to adjust an operating point of the microring device 603, so that the microring device 603 operates at a target operating point.

The target operating point is a crosspoint between a wavelength of an optical signal in the microring device 603 and a spectrum of the microring device 603.

For specific implementation details and benefits corresponding to the adjustment and control method shown in FIG. 17, refer to related descriptions of the adjustment and control system 600 shown in any one of FIG. 6 to FIG. 11, or FIG. 13. Details are not described herein again.

Further, the adjustment and control system provided in embodiments of this application can be implemented in a form of hardware or a combination of hardware and computer software. Whether a function is performed by hardware or hardware driven by computer software depends on particular applications and design constraints of technical solutions. A person skilled in the art may use different methods to implement the described functions for each particular application, but it should not be considered that the implementation goes beyond the scope of embodiments of this application.

A person skilled in the art should understand that embodiments of this application may be provided as a method, a system, or a computer program product. Therefore, this application may be implemented in a form of a hardware-only embodiment, a software-only embodiment, or an embodiment with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can indicate the computer or the another programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Clearly, a person skilled in the art can make various modifications and variations to this application without departing from the scope of this application. This application is intended to cover these modifications and variations of this application provided that they fall within the scope of the claims of this application and equivalent technologies thereof.

## Claims

1. An adjustment and control system, wherein the system comprises a detector, a microring device, and a control device;
the detector is configured to receive a first beam and a second beam, perform optical-to-electrical conversion on the first beam to obtain a first current signal, perform optical-to-electrical conversion on the second beam to obtain a second current signal, and determine a differential current signal between the first current signal and the second current signal, wherein the first beam and the second beam are obtained based on input light of the adjustment and control system; and
the control device is configured to receive the differential current signal, and determine a control signal based on the differential current signal, wherein the control signal is used to adjust an operating point of the microring device, so that the microring device operates at a target operating point, wherein the target operating point is a crosspoint between a wavelength of an optical signal in the microring device and a spectrum of the microring device.

2. The system according to claim 1, wherein the system further comprises a first optical splitter, a second optical splitter, a first optical waveguide, a second optical waveguide, a third optical waveguide, and a fourth optical waveguide;
the first optical splitter is configured to receive the input light, and split the input light to obtain the first beam and a third beam, wherein the first beam is input to the detector through the first optical waveguide, and the third beam is input to the second optical splitter through the third optical waveguide; and
the second optical splitter is configured to receive the third beam, and split the third beam to obtain the second beam and output light, wherein the second beam is input to the detector through the second optical waveguide, and the output light is output through the third optical waveguide; or
the second optical splitter is configured to receive the third beam, and split the third beam to obtain the second beam and a fourth beam, wherein the second beam is input to the detector through the second optical waveguide, the third beam sequentially passes through the third optical waveguide, the microring device, and the fourth optical waveguide to obtain output light, and the output light is output through a drop port of the microring device.

3. The system according to claim 2, wherein
a split ratio of the first optical splitter is determined based on the target operating point; and/or
a split ratio of the second optical splitter is determined based on the target operating point.

4. The system according to claim 1, wherein the system further comprises a first optical splitter, a first optical waveguide, a second optical waveguide, and a third optical waveguide; and
the first optical splitter is configured to receive the input light, and split the input light to obtain the first beam and the second beam, wherein the first beam is input to the detector through the first optical waveguide, and the second beam is input to the detector through the second optical waveguide, wherein
the second beam sequentially passes through the second optical waveguide, the microring device, and the third optical waveguide to obtain output light, and the output light is output through a drop port of the microring device.

5. The system according to claim 4, wherein a split ratio of the first optical splitter is determined based on the target operating point.

6. The system according to claim 1, wherein the system further comprises a first optical splitter, a first optical waveguide, a second optical waveguide, and a third optical waveguide;
the first optical splitter is configured to receive the input light, and split the input light to obtain the first beam and output light, wherein the first beam is input to the detector through the first optical waveguide, and the output light is output through the third optical waveguide; and
the second optical waveguide is located at a drop port of the microring device, the output light sequentially passes through the third optical waveguide, the microring device, and the second optical waveguide to obtain the second beam, and the second beam is input to the detector through the second optical waveguide.

7. The system according to claim 6, wherein
a split ratio of the first optical splitter is determined based on the target operating point of the microring device; and/or
a first coupling coefficient between the second optical waveguide and the microring device is determined based on the target operating point of the microring device; and/or
a second coupling coefficient between the third optical waveguide and the microring device is determined based on the target operating point of the microring device.

8. The system according to claim 7, wherein
the first coupling coefficient is related to a length of an optical waveguide that is in the second optical waveguide and that interacts with the microring device, and/or is related to a distance between the second optical waveguide and the microring device; and
the second coupling coefficient is related to a length of an optical waveguide that is in the third optical waveguide and that interacts with the microring device, and/or is related to a distance between the third optical waveguide and the microring device.

9. The system according to any one of claims 1 to 8, wherein the system further comprises a first optical attenuator and a second optical attenuator;
the first optical attenuator is configured to: before the detector receives the first beam, adjust light intensity of the first beam, and input the adjusted first beam to the detector; and
the second optical attenuator is configured to: before the detector receives the second beam, adjust light intensity of the second beam, and input the adjusted second beam to the detector.

10. The system according to any one of claims 1 to 9, wherein the system further comprises a trans-impedance amplifier;
the detector is further configured to input the differential current signal to the trans-impedance amplifier; and
the trans-impedance amplifier is configured to: before the control device receives the differential current signal, amplify the differential current signal, and then input the amplified differential current signal to the control device.

11. The system according to any one of claims 1 to 10, wherein the system further comprises a drive, and the control signal indicates a drive voltage of the drive;
the control device is further configured to send the control signal to the drive; and
the drive is configured to receive the control signal, and adjust the operating point of the microring device based on the drive voltage.

12. The system according to claim 11, wherein the system further comprises a tuning unit, and the tuning unit is disposed on the microring device; and
that the drive adjusts the operating point of the microring device based on the drive voltage comprises:
the drive adjusts a voltage value or a current value of the tuning unit based on the drive voltage, to adjust the operating point of the microring device.

13. The system according to any one of claims 1 to 12, wherein the microring device comprises a microring and/or a microring modulator.

14. The system according to any one of claims 1 to 13, wherein the system further comprises an optical switch; and
the optical switch is configured to control whether to input the second beam to the detector.

15. An adjustment and control method, applied to an adjustment and control system, wherein the system comprises a detector, a microring device, and a control device; and
the method comprises:
receiving, by the detector, a first beam and a second beam, performing optical-to-electrical conversion on the first beam to obtain a first current signal, performing optical-to-electrical conversion on the second beam to obtain a second current signal, and determining a differential current signal between the first current signal and the second current signal, wherein the first beam and the second beam are obtained based on input light of the adjustment and control system; and
receiving, by the control device, the differential current signal, and determining a control signal based on the differential current signal, wherein the control signal is used to adjust an operating point of the microring device, so that the microring device operates at a target operating point, wherein the target operating point is a crosspoint between a wavelength of an optical signal in the microring device and a spectrum of the microring device.

16. The method according to claim 15, wherein the system further comprises a first optical splitter, a second optical splitter, a first optical waveguide, a second optical waveguide, a third optical waveguide, and a fourth optical waveguide; and
the method further comprises:
receiving, by the first optical splitter, the input light, and splitting the input light to obtain the first beam and a third beam, wherein the first beam is input to the detector through the first optical waveguide, and the third beam is input to the second optical splitter through the third optical waveguide; and
receiving, by the second optical splitter, the third beam, and splitting the third beam to obtain the second beam and output light, wherein the second beam is input to the detector through the second optical waveguide, and the output light is output through the third optical waveguide; or
receiving, by the second optical splitter, the third beam, and splitting the third beam to obtain the second beam and a fourth beam, wherein the second beam is input to the detector through the second optical waveguide, the third beam sequentially passes through the third optical waveguide, the microring device, and the fourth optical waveguide to obtain output light, and the output light is output through a drop port of the microring device.

17. The method according to claim 16, wherein
a split ratio of the first optical splitter is determined based on the target operating point; and/or
a split ratio of the second optical splitter is determined based on the target operating point.

18. The method according to claim 15, wherein the system further comprises a first optical splitter, a first optical waveguide, a second optical waveguide, and a third optical waveguide; and
the method further comprises:
receiving, by the first optical splitter, the input light, and splitting the input light to obtain the first beam and the second beam, wherein the first beam is input to the detector through the first optical waveguide, and the second beam is input to the detector through the second optical waveguide, wherein
the second beam sequentially passes through the second optical waveguide, the microring device, and the third optical waveguide to obtain output light, and the output light is output through a drop port of the microring device.

19. The method according to claim 18, wherein a split ratio of the first optical splitter is determined based on the target operating point.

20. The method according to claim 15, wherein the system further comprises a first optical splitter, a first optical waveguide, a second optical waveguide, and a third optical waveguide; and
the method further comprises:
receiving, by the first optical splitter, the input light, and splitting the input light to obtain the first beam and output light, wherein the first beam is input to the detector through the first optical waveguide, and the output light is output through the third optical waveguide; and
the second optical waveguide is located at a drop port of the microring device, the output light sequentially passes through the third optical waveguide, the microring device, and the second optical waveguide to obtain the second beam, and the second beam is input to the detector through the second optical waveguide.

21. The method according to claim 20, wherein
a split ratio of the first optical splitter is determined based on the target operating point of the microring device; and/or
a first coupling coefficient between the second optical waveguide and the microring device is determined based on the target operating point of the microring device; and/or
a second coupling coefficient between the third optical waveguide and the microring device is determined based on the target operating point of the microring device.

22. The method according to claim 21, wherein
the first coupling coefficient is related to a length of an optical waveguide that is in the second optical waveguide and that interacts with the microring device, and/or is related to a distance between the second optical waveguide and the microring device; and
the second coupling coefficient is related to a length of an optical waveguide that is in the third optical waveguide and that interacts with the microring device, and/or is related to a distance between the third optical waveguide and the microring device.

23. The method according to any one of claims 15 to 22, wherein the system further comprises a first optical attenuator and a second optical attenuator; and
the method further comprises:
before the detector receives the first beam, adjusting, by the first optical attenuator, light intensity of the first beam, and inputting the adjusted first beam to the detector; and
before the detector receives the second beam, adjusting, by the second optical attenuator, light intensity of the second beam, and inputting the adjusted second beam to the detector.

24. The method according to any one of claims 15 to 23, wherein the system further comprises a trans-impedance amplifier; and
the method further comprises:
inputting, by the detector, the differential current signal to the trans-impedance amplifier; and
before the control device receives the differential current signal, amplifying, by the trans-impedance amplifier, the differential current signal, and then inputting the amplified differential current signal to the control device.

25. The method according to any one of claims 15 to 24, wherein the system further comprises a drive, and the control signal indicates a drive voltage of the drive; and
the method further comprises:
sending, by the control device, the control signal to the drive; and
receiving, by the drive, the control signal, and adjusting the operating point of the microring device based on the drive voltage.

26. The method according to claim 25, wherein the system further comprises a tuning unit, and the tuning unit is disposed on the microring device; and
the adjusting, by the drive, the operating point of the microring device based on the drive voltage comprises:
adjusting, by the drive, a voltage value or a current value of the tuning unit based on the drive voltage, to adjust the operating point of the microring device.

27. The method according to any one of claims 15 to 26, wherein the microring device comprises a microring and/or a microring modulator.

28. The method according to any one of claims 15 to 27, wherein the system further comprises an optical switch; and
the method further comprises:
controlling, by the optical switch, whether to input the second beam to the detector.
